# EUROPÄISCHE PATENTANMELDUNG

(11) **EP 1 160 004 A2**
(43) Veröffentlichungstag der Anmeldung: **05.12.2001**
(21) Anmeldenummer: 01111958.3
(22) Anmeldetag: 21.05.2001
(51) Int. Cl.: B01F 15/00

(54) **Fusslager für Rührwellen**

(30) Priorität: 02.06.2000 DE 10027343
(71) Anmelder: Bayer Aktiengesellschaft, 51368 Leverkusen (DE)
(72) Erfinder: Dietz, Wolfgang, 47800 Krefeld (DE)

(57) **Zusammenfassung**

Es wird ein Fußlager für eine Rührwelle eines Behälterrührwerks beschrieben Das Fußlager weist wenigstens einen, insbesondere auf der Wand (2) des Behälters (16) befestigten, Wellenstumpf (1) und eine Rührwelle (9) mit einem Zwischenraum (13) im Bereich des Eingriffs zwischen Wellenstumpf (1) und Rührwelle (9) auf. Der Wellenstumpf (1) und/oder die Rührwelle (9) sind im Bereich des Zwischenraumes (13) auf ihrer Oberfläche mit Gleitelementen versehen, auf denen die gegenüberliegende Fläche der Rührwelle (9) und/oder des Wellenstumpf (1) gleitet und der Wellenstumpf (1) weist Mittel (11) für die Durchleitung einer Spülflüssigkeit (3) durch den Zwischenraum (13) zwischen Rührwelle (9) und Wellenstumpf (1) auf.

## Beschreibung

Die Erfindung betrifft eine neuartige Fußlagerkonstruktion für Rührwellen insbesondere Reaktorrührwellen, bestehend wenigstens aus einem, insbesondere auf der Wand des Behälters befestigten, Wellenstumpf und einer Rührwelle mit einem Zwischenraum im Bereich des Eingriffs zwischen Wellenstumpf und Rührwelle.

Die Erfindung betrifft insbesondere eine Fußlagerkonstruktion für Rührerwellen, die nicht mehr einseitig auf der Antriebsseite frei gelagert werden können, sondern ein Gegenlager am Wellenende benötigen. Diese beispielsweise in Reaktoren befindlichen Lager sind teilweise extremen Bedingungen ausgesetzt, welche sich negativ auf die Lebensdauer des Lagers auswirken können, da korrosive und/oder abrasive Stoffe das Gleitlager vorzeitig zerstören. Das Fußlager eignet sich insbesondere bei langen Rührerwellen mit mehrstufigen Rührorganen, die aufgrund hoher Radialkräfte große Auslenkungen der Rührerwelle zur Folge haben (schlanke, lange Rührbehälter wie z.B. Reaktoren oder Fermenter).

Bei der Behandlung von Feststoffe enthaltenden Flüssigkeiten in Reaktoren mittels Rührvorrichtungen, die am Boden des jeweiligen Reaktors ein Fußlager aufweisen, tritt das Problem auf das die Feststoffe in der Reaktionsflüssigkeit sich im Fußlager festsetzen können. Dadurch wird die Betriebszeit der Reaktoren grundsätzlich vermindert.

In der Rührtechnik werden standardmäßig mehrere Lösungswege für die Lagerung der Rührwelle im Produktraum eingeschlagen:

Die Vermeidung eines Lagers im Rührbehälter führt zwangsläufig zu dickeren Rührwellen und sehr hohen Reaktionskräften auf das verbleibende Lager der Antriebsseite.

Ist eine einseitige Lagerung nicht zweckmäßig oder wirtschaftlich, werden häufig Fußlager am Ende der Rührerwellen mit Gleitflächenkombinationen aus einem PTFE/Glas-Compound und Edelstahl eingesetzt, die durch das Produkt geschmiert werden (Temperaturgrenzen an der Reibfläche <200°C sowie das Fehlen von abrasiven Feststoffen).

Bei höheren Temperaturen und chemische Beständigkeit, werden oft Antimon getränkte Kohle/Koks bzw. spez. Bronzelager verwendet.

Sind abrasive Stoffe vorhanden werden auch entsprechende härtere Werkstoffpaarungen gewählt (Keramiklager z.B. aus SiC oder Hartmetall), so dass der Verschleiß herausgezögert wird. Nachteilig sind die Sprödigkeit und die Temperaturschockempfindlichkeit der Werkstoffe sowie die teueren Werkstoffe und die aufwendigen Bearbeitungsverfahren.

Insbesondere bei der Oxidation von Hexan unter Verwendung von Borsäure wurden die Fußlager der im Reaktor verwendeten Rührwellen soweit beeinträchtigt, dass diese teilweise schon nach einigen Monaten Betriebszeit erneuert werden müssen.

Beim vorliegenden Anwendungsfall ergeben sich die unzureichenden Standzeiten des Fußlagers, durch die Kombination nachteiliger Faktoren die sich wie folgt im einzelnen beschreiben lassen.

Die Oxidation von Cyclohexan zu Cyclohexanon/-anol mit Luftsauerstoff wird bei erhöhtem Druck und erhöhter Temperatur in einer mehrstufigen Rührbehälterkaskade kontinuierlich durchgeführt. Neben dem Cyclohexan wird Borsäure als kristalliner (und abrasiver) Feststoff der Reaktion als Katalysator zugegeben. Bei der Reaktion bilden sich außerdem korrosive bzw. abrasive Nebenprodukte (wie z.B. Carbonsäuren und harzähnliche Feststoffe) die neben der Borsäure das Fußlager frühzeitig verschleißen.

Aufgabe der Erfindung ist es ein Lager für eine Rührwelle bereitzustellen, mit der auch die verfahrenstechnische Behandlung insbesondere abrasive Feststoffe enthaltender Reaktivsysteme bei möglichst langer Standzeit des Lagers optimal beherrscht werden kann und das die weiteren oben genannten Nachteile vermeidet.

Die Aufgabe wird erfindungsgemäß dadurch gelöst, dass in einem Fußlager einer Rührwelle der eingangs genannten Art der auf der Behälterwand befestigte Wellenstumpf auf seiner Oberfläche mit Gleitelementen versehen ist, auf denen die Innenseite der Rührwelle gleitet und dass der Zwischenraum zwischen Wellenstumpf und Rührwellenende mit einer Spülflüssigkeit durchspülbar ist.

Gegenstand der Erfindung ist ein Fußlager für eine Rührwelle eines Behälterrührwerks aufweisend wenigstens einen, insbesondere auf der Wand des Behälters befestigten, Wellenstumpf und eine Rührwelle, die ineinander greifen, mit einem Zwischenraum im Bereich des Eingriffs von Wellenstumpf und Rührwelle, dadurch gekennzeichnet, dass der Wellenstumpf und/oder die Rührwelle im Bereich des Zwischenraumes auf ihrer Oberfläche mit Gleitelementen, bevorzugt Noppen, Ringsegmenten oder axial angeordneten Streifen, versehen sind, auf denen die jeweils gegenüberliegende Fläche der Rührwelle und/oder des Wellenstumpfs gleitet und dass der Wellenstumpf Mittel, bevorzugt eine Bohrung, für die Durchleitung einer Spülflüssigkeit durch den Zwischenraum zwischen Rührwelle und Wellenstumpf aufweist.

Bevorzugt ist eine Ausführung des Fußlagers, bei der die Rührwelle den Zwischenraum aufweist, in den der Wellenstumpf als Zapfen eingreift.

In einer bevorzugten Ausführung der Erfindung ist zur Führung der Rührwelle eine zusätzliche Ringdichtung zwischen Rührwelle und Wellenstumpf vorgesehen ist, die die Durchleitung der Spülflüssigkeit ermöglicht und für eine Aufrechterhaltung der Druckdifferenz zwischen dem Zwischenraum und dem Behälter sorgt.

Die Gleitelemente bestehen bevorzugt aus einem Kunststoff mit geringem Reibungskoeffizienten.

Besonders bevorzugt ist der Kunststoff für die Gleitelemente ein Kunststoff auf Basis von gegebenenfalls kohle- oder glasfaserverstärktem Polytetrafluorethylen (PTFE) und/oder Polyetheretherketon (PEEK), insbesondere ein Hochtemperaturverbundwerkstoff auf Basis von Polytetrafluorethylen (PTFE) und/oder Polyetheretherketon (PEEK).

In einer bevorzugten Ausführung der Erfindung sind auf dem Wellenstumpf Gleitelemente aus unterschiedlichem Material angeordnet. Besonders bevorzugt sind abwechselnd Gleitelemente aus Polytetrafluorethylen (PTFE) oder Polyetheretherketon (PEEK) auf dem Wellenstumpf angebracht.

Der Kunststoff für die Ringdichtung ist insbesondere ein Kunststoff mit geringem Reibungskoeffizienten und hohem Verschleißwiderstand, insbesondere ein Kunststoff auf Basis von gegebenenfalls kohle- oder glasfaserverstärktem Polytetrafluorethylen (PTFE) und/oder Polyetheretherketon (PEEK), insbesondere ein Hochtemperaturverbundwerkstoff auf Basis von Polytetrafluorethylen (PTFE) und/oder Polyetheretherketon (PEEK), besonders bevorzugt auf Basis von Polyetheretherketon (PEEK).

In einer bevorzugten Variante des Fußlagers sind die Gleitelemente auf einem mit dem Wellenstumpf verbundenen insbesondere lösbaren Mantel angebracht.

Zum Austausch der Verschleißteile ist in einer bevorzugten Ausführung des Fußlagers die Rührwelle mindestens zweistückig ausgebildet und weist eine, insbesondere lösbare Metallhülse auf die mit den Gleitelementen Kontakt hat. Die Metallhülse ist dabei in das Wellenende eingelassen.

Wenn nicht eine geeignete Spülflüssigkeit dem Fußlager zugeleitet werden kann und über den Drosselspalt der Ringdichtung in den Behälter gelangen soll, lässt sich auch ein geeigneter externer Kühl- und Schmierkreislauf mit Pumpe und Wärmeaustauscher einsetzen, wobei der Ringspalt dann abgedichtet ist.

Zweckmäßigerweise sollte zusätzlich ein Ausgleichsbehälter, der mit beispielsweise Stickstoff drucküberlagert ist, ergänzt werden, ähnlich wie dies bei Sperrflüssigkeiten einer Gleitringdichtung üblich ist.

Die Vorteile und Wirkungen der Erfindung lassen sich wie folgt beschreiben:
Durch den Wellenstumpf, der am Reaktor befestigt ist, wird über eine axiale Bohrung Spülflüssigkeit (z.B. Hexan) eingebracht, wobei die Spülflüssigkeit von oben nach unten das Fußlager durchströmt und dabei die Gleitelemente umströmt. Die Spülflüssigkeit verlässt das Fußlager über den Drosselspalt des schwimmend gelagerten bevorzugten Dichtrings.

Durch den engen Drosselspalt tritt die Spülflüssigkeit mit hoher Geschwindigkeit in den Reaktorraum aus. Der hierdurch bedingte Druckverlust führt zu einem deutlich höherem Druckniveau im Fußlager, so dass das Eindringen von Feststoff (z.B. Borsäure) sicher verhindert wird.

Wegen der bevorzugten "schwimmenden" Führung des Dichtringes passt sich der Dichtring den Auslenkungen der Rührerwelle an, ohne zu verschleißen, so dass die sehr enge Spaltgeometrie erhalten bleibt. Zusätzlich wird der Dichtring mit Federkraft und durch den höheren Innendruck an das Gehäuse gepresst, wodurch gewährleistet ist, dass die Spülflüssigkeit durch den Drosselspalt strömt.

Die Spülflüssigkeit hat neben der beschriebenen Funktion, Borsäure aus dem Fußlager fernzuhalten, eine weitere Aufgabe, die Gleitelemente zu kühlen (verbessert die Standzeit des Fußlagers) sowie die Reibung zu reduzieren (Gleitfilmeffekt).

Teile der Gleitelemente sowie der Dichtring sind bevorzugt aus einem Kunststoff- compound mit tribologischen Eigenschaften (z.B. Matrix PEEK) hergestellt, das einen sehr hohen Verschleißwiderstand besitzt.

Wegen dieser Eigenschaften sollte die metallische Lauffläche hinsichtlich Härte und Oberflächenbeschaffenheit gegebenenfalls angepasst werden.

Durch die bevorzugte Mischung von PEEK und PTFE-Noppen wird die Gleitreibung durch den sich bildenden PTFE-Lauffilm günstig beeinflusst, da bei den gegeben Bedingungen im Fußlager Mischreibung auftritt (kein permanenter Schmierfilm).

Die Erfindung wird nachfolgend anhand der Figuren beispielhaft weiter erläutert.
- Figur 1: zeigt einen Rührbehälter mit Rührwelle und erfindungsgemäßem Fußlager
- Figur 2: zeigt einen Querschnitt durch eine bevorzugte Ausführungsform des Fußlagers

### Beispiel:

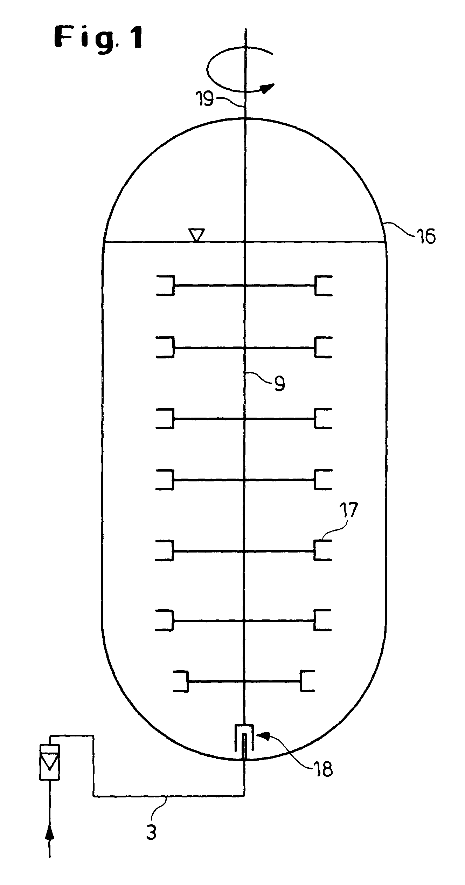

Fig. 1 zeigt den Rührbehälter 16 mit der sich drehenden Rührerwelle 9 einschließlich der mehrstufigen Rührorgane 17 und das im Rührbehälter 16 befindliche Fußlager 18. Üblicherweise befindet sich am oberen Teil 19 des Rührbehälters 16 der Antrieb (hier nicht gezeichnet) mit einem Festlager zur Aufnahme der axialen und radialen Wellenkräfte und mit einer Wellenabdichtung, während am unteren Ende der Welle 9 nur die zur Welle 9 radialen Wellenkräfte durch das Fußlager 18 aufgenommen werden. Zum Schutz der Gleitflächen des Fußlagers 18 vor Fremdstoffen, wird durch die Einlassleitung 3 eine saubere Sperrflüssigkeit in das Fußlager kontinuierlich zugegeben.

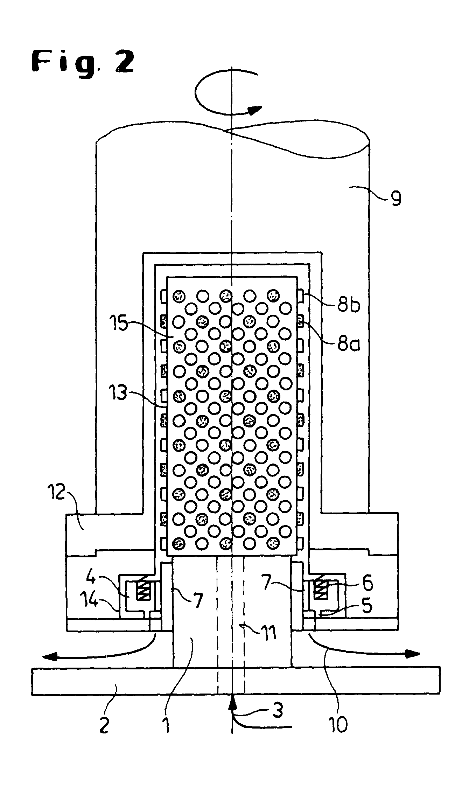

In Figur 2 ist der Aufbau des Fußlagers im Querschnitt gezeigt. Auf der Behälterwand 2 eines Hexanreaktors, die in Figur 1 nur im Ausschnitt gezeichnet ist, ist der Wellenstumpf 1 aufgeschweißt. Der Wellenstumpf 1 und die Behälterwand 2 weisen einen Durchgang 11 für eine Spülflüssigkeit auf, der mit einer externen Zuleitung 3 verbunden ist. Der Durchgang 11 mündet in einem zylindrischen Zwischenraum 13 im Ende der Rührwelle 9. In der vorliegenden Ausführung ist der Zwischenraum 13 von einer speziell ausgebildeten Edelstahlhülse 12 umgeben, die in das Ende der Rührwelle 9 eingeschraubt ist.

An der zur Behälterwand 2 gerichteten Seite der Metallhülse 12 ist eine ringförmige Nut 14 auf der Innenseite der Metallhülse 12 angebracht. Die Nut 14 nimmt eine Ringdichtung 4 auf die von Druckfedern 6 auf ihrer Oberseite mit ihrer Dichtlippe 5 gegen die untere Fläche der Dichtnut 14 gedrückt wird. Im Bereich der Nut 14 ist auf den Umfang des Wellenstumpfs 1 eine Wellenschutzhülse 7 aus oberflächenvergütetem Edelstahl aufgesetzt und mit diesem verschraubt. Oberhalb der Wellenschutzhülse 7 ist auf dem Umfang des Wellenstumpfs 1 ein Mantel 15 aufgesetzt und mit dem Wellenstumpf 1 verschraubt, der wiederum auf seiner Oberfläche mit einer Vielzahl von Gleitnoppen 8 versehen ist. Die Gleitnoppen 8 bestehen hierbei in der Mehrzahl aus Hartkoks enthaltendem Polytetrafluorethylen (Noppen 8b) und die weiteren Noppen 8a aus kohlenstofffaserverstärktem PEEK.

Die Spülflüssigkeit 3, welche mit dem im Reaktor verwendeten Reaktionsflüssigkeit identisch ist, tritt wie oben beschrieben durch den Durchgang 11 in den Zwischenraum 13 ein. Die Spülflüssigkeit 3 fließt an den Gleitnoppen 8 vorbei, passiert den Zwischenraum zwischen der Wellenschutzhülse 7 und der Ringdichtung 4 und tritt durch den freien Zwischenraum 10 zwischen der Metallhülse 12 und der Behälterwand 2 in den Reaktor ein.

Das Fußlager wurde in einem Reaktor zur Hexanoxidation eingesetzt. Hierin stellte der abrasive und korrosive Feststoff Borsäure sowie feste Nebenprodukte (Harz) die Hauptbelastung der Lagerkonstruktion dar.

Mit Hilfe des oben beschriebenen Fußlagers war es möglich die Standzeit der Reaktorrührwelle 9 gegenüber einer konventionellen Reaktorrührwelle von typischerweise etwa drei Monaten auf zwei Jahre zu verlängern, ohne dass ein erkennbarer Verschleiß auftrat.

## Patentansprüche

1. Fußlager für eine Rührwelle eines Behälterrührwerks aufweisend wenigstens einen, insbesondere auf der Wand (2) des Behälters (16) befestigten, Wellenstumpf(1) und eine Rührwelle (9), die ineinander greifen, mit einem Zwischenraum (13) im Bereich des Eingriffs von Wellenstumpf(1) und Rührwelle (9), **dadurch gekennzeichnet, dass** der Wellenstumpf(1) und/oder die Rührwelle (9) im Bereich des Zwischenraumes (13) auf ihrer Oberfläche mit Gleitelementen (8), bevorzugt Noppen, Ringsegmenten oder axial angeordneten Streifen, versehen sind, auf denen die jeweils gegenüberliegende Fläche der Rührwelle (9) und/oder des Wellenstumpfs (1) gleitet und dass der Wellenstumpf (1) Mittel (11), bevorzugt eine Bohrung (11), für die Durchleitung einer Spülflüssigkeit (3) durch den Zwischenraum (13) zwischen Rührwelle (9) und Wellenstumpf (1) aufweist.

2. Fußlager nach Anspruch 1, **dadurch gekennzeichnet, dass** die Rührwelle (9) den Zwischenraum (13) aufweist, in den der Wellenstumpf (1) eingreift.

3. Fußlager nach Anspruch 1 oder 2, **dadurch gekennzeichnet, dass** zur Führung der Rührwelle (9) eine zusätzliche Ringdichtung (4) zwischen Rührwelle (9) und Wellenstumpf(1) vorgesehen ist, die die Durchleitung der Spülflüssigkeit (3) ermöglicht.

4. Fußlager nach einem der Ansprüche 1 bis 3, **dadurch gekennzeichnet, dass** die Gleitelemente (8) aus einem Kunststoff mit geringem Reibungskoeffizienten sowie hohem Verschleißwiderstand bestehen.

5. Fußlager nach Anspruch 4, **dadurch gekennzeichnet, dass** der Kunststoff für die Gleitelemente (8) ein Kunststoff auf Basis von gegebenenfalls kohle- oder glasfaserverstärktem Polytetrafluorethylen (PTFE) und/oder Polyetheretherketon (PEEK), insbesondere ein Hochtemperaturverbundwerkstoff auf Basis von Polytetrafluorethylen (PTFE) und/oder Polyetheretherketon (PEEK) ist.

6. Fußlager nach einem der Ansprüche 1 bis 5, **dadurch gekennzeichnet, dass** auf dem Wellenstumpf(1) Gleitelemente (8) aus unterschiedlichem Material angeordnet sind.

7. Fußlager nach Anspruch 6, **dadurch gekennzeichnet, dass** abwechselnd Gleitelemente (8) aus Polytetrafluorethylen (PTFE) oder Polyetheretherketon (PEEK) auf dem Wellenstumpf(1) angebracht sind.

8. Fußlager nach einem der Ansprüche 1 bis 7, **dadurch gekennzeichnet, dass** der Kunststoff für die Ringdichtung (4) ein Kunststoff mit geringem Reibungskoeffizienten und hohem Verschleißwiderstand, insbesondere ein Kunststoff auf Basis von gegebenenfalls kohle- oder glasfaserverstärktem Polytetrafluorethylen (PTFE) und/oder Polyetheretherketon (PEEK), insbesondere ein Hochtemperaturverbundwerkstoff auf Basis von Polytetrafluorethylen (PTFE) und/oder Polyetheretherketon (PEEK), besonders bevorzugt auf Basis von Polyetheretherketon (PEEK) ist.

9. Fußlager nach einem der Ansprüche 1 bis 8, **dadurch gekennzeichnet, dass** die Gleitelemente (8) auf einem mit dem Wellenstumpf (1) verbundenen insbesondere lösbaren Mantel (15) angebracht sind.

10. Fußlager nach einem der Ansprüche 1 bis 9, **dadurch gekennzeichnet, dass** das Ende der Rührwelle (9) wenigstens zweistückig ausgebildet ist und eine, insbesondere lösbare Metallhülse (12) aufweist die mit den Gleitelementen (8) Kontakt hat.

11. Fußlager nach Ansprüchen 1 bis 10, **dadurch gekennzeichnet, dass** die Durchführung (11) für die Spülflüssigkeit (3) um eine Rückführungsleitung ergänzt wird, und die Spülflüssigkeit nicht in den Reaktor, sondern in einen externen Sperrflüssigkeitskreislauf mit Ausgleichsgefäß zurückgeführt wird, wobei der Drosselspalt zur Welle abgedichtet ist.
